**Europäisches Patentamt**

**European Patent Office**

**Office européen des brevets**

(19)

(11) Veröffentlichungsnummer: **0 173 182**
**B1**

# EUROPÄISCHE PATENTSCHRIFT

(12)

(45) Veröffentlichungstag der Patentschrift:
**19.11.87**

(51) Int. Cl.⁴: **B 65 G 11/12**

(21) Anmeldenummer: **85110266.5**

(22) Anmeldetag: **16.08.85**

(54) Hub- und Schwenkvorrichtung für den Austragsabschnitt einer rohrförmigen Schuttrutsche.

(30) Priorität: **28.08.84 DE 3431498**

(43) Veröffentlichungstag der Anmeldung:
**05.03.86 Patentblatt 86/10**

(45) Bekanntmachung des Hinweises auf die Patenterteilung:
**19.11.87 Patentblatt 87/47**

(84) Benannte Vertragsstaaten:
**AT BE CH DE FR GB IT LI LU NL SE**

(56) Entgegenhaltungen:
**DE - A - 2 919 781**
**DE - B - 2 259 601**
**GB - A - 244 012**
**US - A - 948 723**

(73) Patentinhaber: **Albert Böcker GmbH & Co. KG,**
**Waldstrasse 1, D-4712 Werne (DE)**

(72) Erfinder: **Böcker, Albert, Im Thünen 28, D-4712 Werne**
**(DE)**

ACTORUM AG

## Beschreibung

Die Erfindung betrifft eine Hub- und Schwenkvorrichtung für den Austragsabschnitt einer rohrförmigen Schuttrutsche, deren Rutschenturm einen in etwa vertikal verlaufenden unteren Rutschenabschnitt trägt, der über eine Drehverbindung horizontal und vertikal schwenkbar mit dem Austragsabschnitt verbunden ist.

Bei einer Material- oder Schuttrutsche nach dem Std. d. T. (DE-OS 29 19 781) ist es bekannt, eine aus mehreren Rutschenschüssen bestehende Schuttrutsche so auszubilden, dass sie einen im wesentlichen senkrecht stehenden teleskopierbaren Abschnitt aufweist, der in seinem unteren Bereich in einen Austragsabschnitt übergeht. Der Austragsabschnitt weist mit Bezug auf seine Länge zwei orthogonal versetzt zueinander angeordnete Schwenklager auf, die es ermöglichen, dass der Austragsabschnitt in drei Richtungen, nämlich nach links und rechts horizontal sowie nach oben schwenkbar ist. Zu diesem Zweck unterteilt sich der Austragsabschnitt in ein oberes Gelenkstück und ein unteres Gelenkstück. Mit der vorgenannten Schwenkeinrichtung ist zwar die gewünschte Beweglichkeit des Austragsabschnittes erreichbar; sie baut jedoch ausserordentlich lang, weil die beiden senkrecht zueinander stehenden Achsen relativ weit voneinander entfernt sein müssen. Dies hat den Nachteil, dass ein sehr starkes Abschwenken des Gelenkstückes erforderlich ist, wenn entsprechend hochbauende Lastfahrzeuge mit Schüttgut beladen werden sollen. Dies erfordert eine starke Überlappung im Schwenkbereich des oberen Gelenkstückes sowie ausreichend Platz im Austragsbereich des Austragsabschnittes. Dieser Platz ist jedoch in aller Regel nicht vorhanden.

Nach einem weiteren, noch nicht zum Std. d. T. gehörenden Vorschlag des Anmelders werden die vorstehend beschriebenen Nachteile dadurch beseitigt, dass zwischen dem oberen Rutschenabschnitt und dem Austragsabschnitt ein Drehkranz angeordnet ist, an dessen dem Austragsabschnitt zugeordnetem Drehteil ein gegenüber dem Austragsabschnitt formschlüssig gleitendes Schwenksegment schwenkbar verlagert ist. Hierdurch ist es möglich, die Schwenkachse des Austragsabschnittes bis unmittelbar in den Bereich des Drehkranzes zu verlegen, d.h. der Schwenkpunkt des Austragsabschnittes kann gegenüber der bisherigen Ausführungsform weiter nach oben verlegt werden, so dass hierdurch bereits eine höhere Position der Austragsöffnung über dem Boden bei gleichem Schwenkwinkel erreicht wird. Mittels des Drehkranzes können dabei beliebige Schwenkstellungen um die vertikale Achse erzielt werden.

Sowohl bei der vorbeschriebenen, dem Std. d. T. zuzurechnenden Schuttrutsche gemäss DE-OS 29 19 781 als auch bei der noch nicht zum Std. d. T. gehörenden Ausführungsform ist es wünschenswert, die Austragshöhe des Austragsabschnittes auf einfache Weise verändern zu können.

In der Praxis hat man sich hierzu bisher eines Flaschenzuges oder dgl. bedient, wobei das zu verkürzende Seil zwischen dem Austragsabschnitt und einem Punkt oberhalb des Drehkranzes am untersten Rutschenschuss eingespannt war.

Mit derartigen Hilfsmitteln war es zwar möglich, die Höhe des Austragsendes, d.h. die Höhe der Austragsöffnung zu variieren; bei einem seitlichen Schwenken des Austragsabschnittes war der Austragsabschnitt jedoch stets bemüht, in die «Normallage» zurückzudrehen, weil das schrägverlaufende Seil ein Rückholmoment auf den Austragsabschnitt ausübte.

Es ist jedoch in der Praxis wünschenswert, den Austragsabschnitt – beispielsweise nach Beladen eines LKW's – sowohl in der Höhe als auch seitlich verschwenken zu können, damit – während der LKW beispielsweise seine Position verlässt – das Schüttgut zwischenzeitlich in einen in Warteposition befindlichen Container gegeben werden kann. Dabei ist es von grosser Wichtigkeit, dass der zur Seite geschwenkte Austragsabschnitt in dieser Stellung verbleibt, ohne dass ein Rückholmoment auf ihn ausgeübt wird.

Aufgabe der Erfindung ist es deshalb, eine Hub- und Schwenkvorrichtung für den Austragsabschnitt einer gattungsgemässen Schuttrutsche so auszubilden, dass sowohl die Höhe der Austragsöffnung auf einfache Weise veränderbar ist, als auch der Austragsabschnitt in dem erforderlichen Bereich verschwenkt werden kann, ohne dass ein störendes Rückholmoment auf den Austragsabschnitt ausgeübt wird.

Die Erfindung löst die gestellte Aufgabe dadurch, dass die Hub- und Schwenkvorrichtung aus einem mit seinem einen Ende am Rutschenturm festlegbaren längenveränderlichen Seil besteht, welches über eine oberhalb der Drehverbindung an der einen Seite des Rutschenturmes bzw. des unteren Rutschenabschnittes angeordnete Umlenkführung zu wenigstens einer an der Oberseite des Austragsabschnittes an diesem festgelegten zweiten Umlenkführung verlaufend geführt ist und mit seinem anderen Ende etwa der ersten Umlenkführung gegenüberliegend an der gegenüberliegenden Seite des Rutschenturmes bzw. des unteren Rutschenabschnittes festgelegt ist.

Mit der erfindungsgemässen Lösung ist nunmehr erreichbar, dass mittels des Seiles zunächst die Höhe der Austragsöffnung verändert werden kann. Dabei wird eine bestimmte Seillänge zwischen der oberhalb der Drehverbindung an der einen Seite des Rutschenturmes angeordneten Umlenkführung und dem an der anderen Seite des Rutschenturmes angeordneten Festpunkt festgelegt. An diesem Seil ist nun die Oberseite des Austragsabschnittes mit einer weiteren Umlenkführung geführt, d.h. beim Schwenken des Austragsabschnittes läuft diese zweite Umlenkführung an dem praktisch festgelegten Seilabschnitt entlang. Da hierbei kein Zug auf das Seil ausgeübt wird, bleibt der Austragsabschnitt in jeder gewünschten Schwenkstellung stehen, ohne dass auf ihn ein Rückholmoment ausgeübt wird. Das Verschwenken des Austragsabschnittes selbst kann von Hand oder durch ein zusätzliches, nicht dargestelltes Zugseil oder dgl. erfolgen.

In Ausgestaltung der Erfindung ist das Seil mit seinem einen Ende an einer unterhalb der Drehverbindung am Rutschenturm angeordneten selbsthemmenden Handwinde festgelegt. Auf diese Weise kann der Bedienungsmann durch Drehen der Handkurbel die Höhe der Austragsöffnung bestimmen.

Erfindungsgemäss ist die oberhalb der Drehverbindung an der einen Seite des Rutschenturmes bzw. des unteren Rutschenabschnittes angeordnete Umlenkführung eine um eine horizontale Drehachse drehbare Seilrolle, die nach einem weiteren Merkmal in einem Rollenkasten gelagert ist, der seinerseits um eine vertikale, d.h. parallel zum unteren Rutschenabschnitt verlaufende Achse schwenkbar an diesem oder dem Rutschenturm befestigt ist. Diese besondere Verlagerung der Seilrolle hat den Vorteil, dass das Seil bei unterschiedlichsten Schwenkstellungen des Austragsabschnittes immer exakt auf die Seilrolle aufläuft, weil diese an der Schwenkbewegung teilnimmt.

Die an der Oberseite des Austragsabschnittes an diesem festgelegte zweite Umlenkführung kann unterschiedlich ausgebildet sein; es muss jedoch gewährleistet sein, dass sie geeignet ist, beim Schwenken des Austragsabschnittes an dem quasi an beiden Enden festgelegten Zugseil entlangzulaufen.

Nach einer vorteilhaften Ausgestaltung der Erfindung weist der Austragsabschnitt an seiner Oberseite zwei aufragende, an ihren oberen freien Enden durch einen Querträger verbundene Stützen auf. Die oberen freien Enden dieser Stützen sind mit der Oberseite des Austragsabschnittes durch einen Zugseilabschnitt fester Länge verbunden, wobei sich der Befestigungspunkt des Zugseilabschnittes an der Oberseite des Austragsabschnittes zwischen dem Befestigungspunkt der Stütze am Austragsabschnitt und der Austragsöffnung befindet.

Nach einem besonderen erfindungswesentlichen Merkmal sind die oberen freien Enden der Stützen durch einen Querträger verbunden. Dieser Querträger ist der eigentliche Träger der an der Oberseite des Austragsabschnittes festgelegten zweiten Umlenkführung.

Erfindungsgemäss ist hierzu der Querträger vertikal schwenkbar an den oberen freien Enden angelenkt, so dass sich die Umlenkführung bei unterschiedlicher Höhe der Austragsöffnung jeweils dem Seilverlauf anpassen kann. Im einzelnen wird hierzu vorgeschlagen, dass der Querträger aus einem U-Profil besteht und an der Stegaussenseite des U-Profiles Achsstummel aufweist, mit denen er drehbar in Ausnehmungen der Stützen gelagert ist. Die U-profilartige Ausbildung des Querträgers ermöglicht es weiter, dass er an seinen beiden Enden jeweils die Lager für zwei die Umlenkführung bildende, zwischen den Schenkeln des U-Profils angeordnete Seilrollen aufweist.

Die vorbeschriebene Ausführungsform hat den Vorteil, dass der Abschnitt des Zugseiles, der zum einen zwischen der oberhalb der Drehverbindung an der einen Seite des Rutschenturmes und der einen Seilrolle im Querträger angeordnet ist und der Abschnitt des Zugseiles, der zwischen der anderen Rolle im Querträger und dem Festpunkt auf der anderen Seite des Rutschenturmes angeordnet ist, jeweils relativ weit seitlich vom Rutschenturm verläuft, was das seitliche Verschwenken des Austragsabschnittes erleichtert, weil das Seil nur bei extremen Schwenkstellungen extrem abgewinkelt werden muss.

Damit bei starken Abwinkelungen keine Verschleisserscheinungen an dem unteren Rutschenabschnitt bzw. den Streben des Rutschenturmes auftreten, ist nach einem weiteren Merkmal der Erfindung der Rutschenturm bzw. der untere Rutschenabschnitt an den vertikalen, dem Querträger zugewandten Kanten im Bereich der Seilführung mit Rollen, Schleissblechen oder dgl. versehen.

Die Erfindung wird nachfolgend anhand eines Ausführungsbeispieles näher erläutert.

Es zeigen:

Fig. 1 in einer Gesamtansicht in perspektivischer Darstellung die Hub- und Schwenkvorrichtung

Fig. 2 in gegenüber Fig. 1 vergrösserter Darstellung den Verlauf der Seilführung

Fig. 3 den Schnitt III-III gemäss Fig. 2

Fig. 4 eine der Fig. 3 entsprechende Darstellung mit ausgeschwenktem Austragsabschnitt

Fig. 5 die erste Umlenkführung in vergrösserter, perspektivischer Darstellung

Fig. 6 den Querträger in perspektivischer Darstellung

Die nachfolgenden Bezugszahlen wurden – soweit sachdienlich – in die einzelnen Fig. eingetragen.

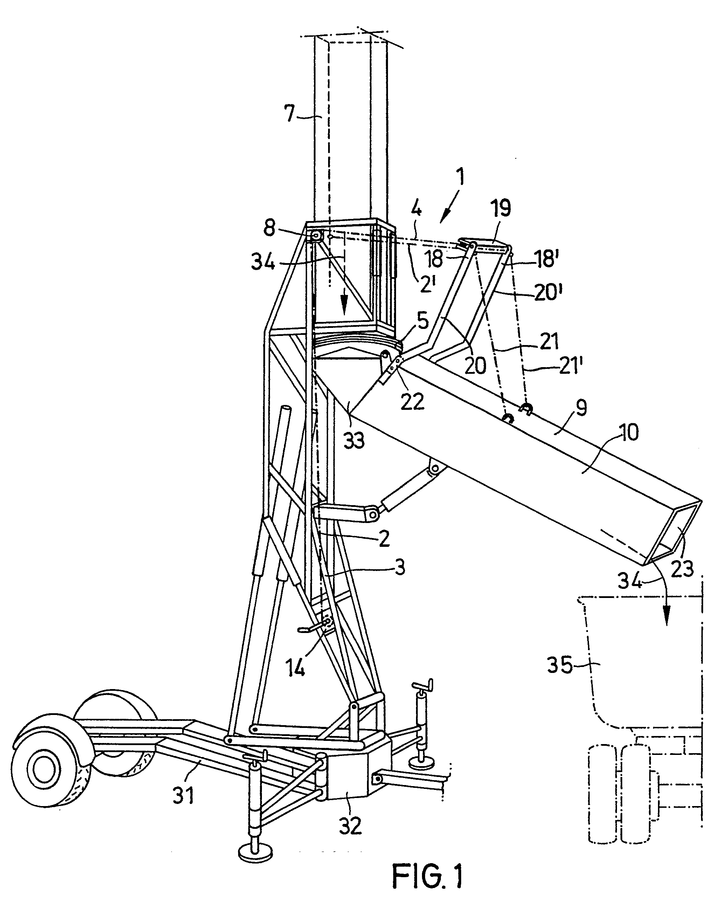

Aus der Fig. 1 ist die räumliche Darstellung des unteren Teiles einer Schuttrutsche ersichtlich, die in ihren wesentlichen Bauteilen aus dem Rutschenturm 3 besteht, der auf einem Fahrgestell 31 abgestützt ist. Das Fahrgestell 31 weist einen Drehkranz 32 auf, mit dessen Hilfe der Rutschenturm 3 in eine Grundposition verbracht werden kann.

Am oberen Ende des Rutschenturmes 3 ist der untere Rutschenabschnitt 7 einer aus mehreren Schüssen bestehenden rohrförmigen Schuttrutsche fest verlagert. An den unteren Rutschenabschnitt 7 schliesst sich über eine Drehverbindung 5 der Austragsabschnitt 10 an, wobei zwischen Drehverbindung 5 und Austragsabschnitt 10 ein Schwenksegment 33 eingeschaltet ist, welches den sicheren Transport des Abraummaterials in Pfeilrichtung 34 bei unterschiedlicher Höhe der Austragsöffnung 23 – beispielsweise beim Beladen eines Lastfahrzeuges 35 – ermöglicht.

Die Arbeitsweise der Hub- bzw. Schwenkvorrichtung ist folgende:

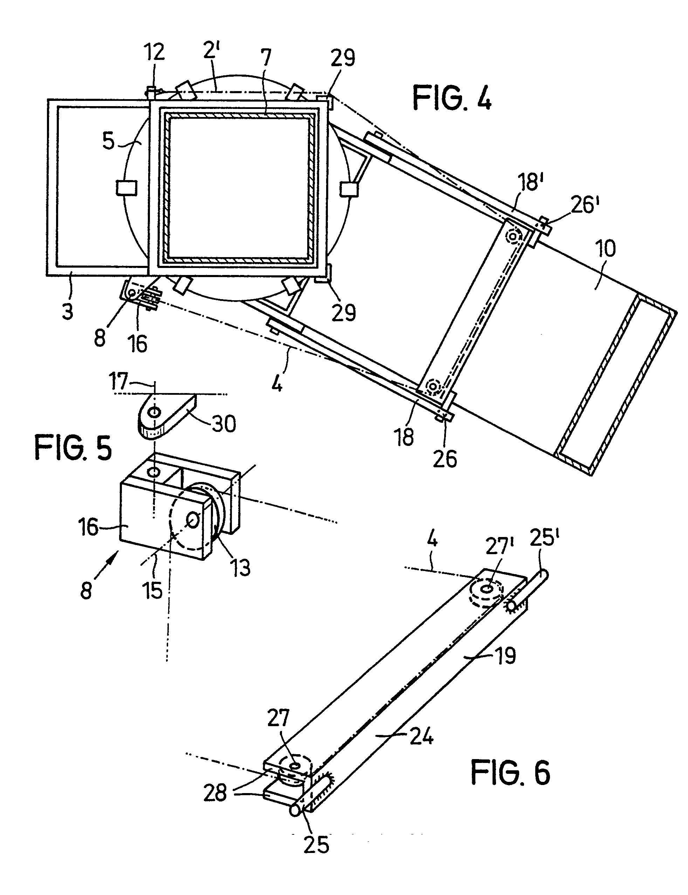

Ein Ende des Seiles 4 ist auf der selbsthemmenden Handwinde 14, welche am Rutschenturm 3 befestigt ist, aufgewickelt. Von hier aus verläuft das Seil über die Umlenkführung 8. Die Umlenkführung 8 (s. auch Fig. 5) besteht aus einer in einem Rollenkasten 16 um eine in etwa horizontale Achse 15 drehbaren Seilrolle 13. Der Rollenkasten 16 ist seinerseits um eine in etwa vertikale Achse 17 schwenkbar verlagert; hierzu sind Lageraugen 30 an den Streben des Rutschenturmes angebracht. Über die Seilrolle 13 verläuft das Seil 4 weiter in Richtung auf die zweite Umlenkführung, die aus den Seilrollen 11 und 11' besteht. Von der Seilrolle 11' verläuft das Seil weiter zum Festpunkt 12 an den Streben des Rutschenturmes; der Festpunkt 12 liegt in etwa der Umlenkführung 8 gegenüber.

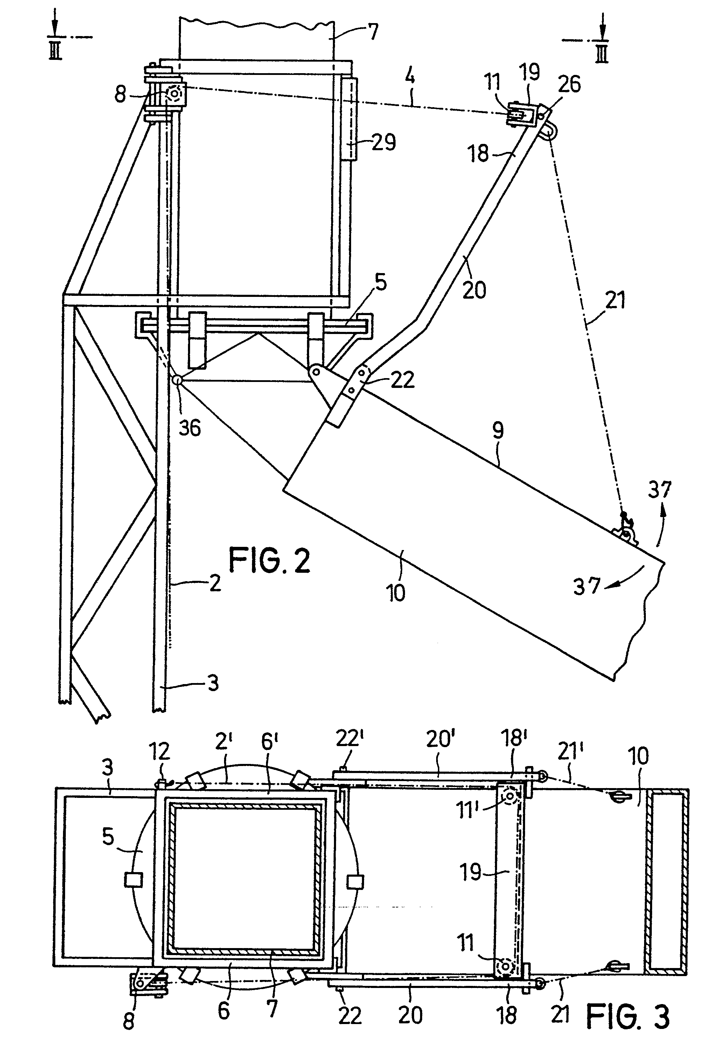

An dem Austragsabschnitt 10 sind bei 22 und 22' zwei Stützen 20 und 20' angeordnet, deren obere freie Enden mit 18 und 18' bezeichnet wurden. Diese oberen Enden weisen Ausnehmungen 26 und 26' auf, in die die Achsstummel 25 und 25' eines Querträgers 19 einfassen. Der Querträger 19 besteht aus einem U-Profil, wobei die Achsstummel an der Stegaussenseite 24 des Querträgers 19 angeordnet sind. Wie insbesondere aus den Fig. 2 und 6 ersichtlich, bilden die Schenkel 28 des Querträgers 19 die Lager 27 und 27' für die Seilrollen 11 und 11'. Durch die schwenkbewegliche Lagerung des Querträgers 19 an den Stützen 20, 20' kann sich bei unterschiedlicher Höhe des Austragsabschnittes 10 die Rollenführung jeweils an den Seilverlauf anpassen. Die einwandfreie Abdichtung zwischen dem unteren Rutschenabschnitt 7 und dem Austragsabschnitt 10 erfolgt durch das um die Achse 36 drehbare Schwenksegment.

Nach erfolgter Bewegung des Austragsabschnittes in Pfeilrichtung 37 ist das Seil 4 durch die selbsthemmende Handwinde 14 praktisch in seiner Länge festgelegt. Zur sicheren Abfangung des Austragsabschnittes 10 dienen die Zugseilabschnitte 21 und 21'.

Wird nun, wie aus der Fig. 4 ersichtlich, der Austragsabschnitt 10 seitlich geschwenkt, so verändert sich die Länge des Seiles 4 zwischen der Umlenkführung 8 (d.h. der Seilrolle 13) und dem Festpunkt 12 nicht. Die durch die beiden Seilrollen 11 und 11' gebildete zweite Umlenkführung läuft an dem Zugseil 4 entlang, ohne dass ein Rückholmoment auf den Austragsabschnitt 10 ausgeübt wird. Er bleibt also in der seitlich verschwenkten Stellung stehen.

Die Anordnung zweier im Abstand vorgesehener Stützen 20, 20' sowie die Zwischenschaltung eines relativ langen Querträgers 19 hat den Vorteil, dass das von der einen Seite 6 des Rutschenturmes 3 zur gegenüberliegenden Seite 6' geführte Seil 4 beim Ausschwenken (s. Fig. 4) nicht zu starken Abwinkelungen unterliegt. Damit die Kanten des Rutschenturmes jedoch vor Verschleiss geschützt sind, sind zusätzlich Schleissbleche 29 oder nicht dargestellte Rollen vorgesehen, die die Kanten des Rutschenturmes im Bereich der Seilführung schützen.

**Patentansprüche**

1. Hub- und Schwenkvorrichtung für den Austragsabschnitt (10) einer rohrförmigen Schuttrutsche, deren Rutschenturm (3) einen in etwa vertikal verlaufenden unteren Rutschenabschnitt (7) trägt, der über eine Drehverbindung (5) horizontal und vertikal schwenkbar mit dem Austragsabschnitt (10) verbunden ist, dadurch gekennzeichnet, dass die Hub- und Schwenkvorrichtung (1) aus einem mit seinem einen Ende (2) am Rutschenturm (3) festlegbaren längenveränderlichen Seil (4) besteht, welches über eine oberhalb der Drehverbindung (5) an der einen Seite (6) des Rutschenturmes (3) bzw. des unteren Rutschenabschnittes (7) angeordnete Umlenkführung (8) (Seilrolle (13)) zu wenigstens einer an der Oberseite (9) des Austragsabschnittes (10) an diesem festgelegten zweiten Umlenkführung (Seilrollen (11, 11')) verlaufend geführt ist und mit seinem anderen Ende (2'), etwa der ersten Umlenkführung (8) gegenüberliegend, an der gegenüberliegenden Seite (6') des Rutschenturmes bzw. des unteren Rutschenabschnittes festgelegt (Festpunkt (12)) ist.

2. Hub- und Schwenkvorrichtung nach Anspruch 1, dadurch gekennzeichnet, dass das Seil (4) mit seinem einen Ende (2) an einer unterhalb der Drehverbindung (5) am Rutschenturm (3) angeordneten selbsthemmenden Handwinde (14) festgelegt ist.

3. Hub- und Schwenkvorrichtung nach Anspruch 1, dadurch gekennzeichnet, dass die oberhalb der Drehverbindung (5) an der einen Seite des Rutschenturmes (3) bzw. des unteren Rutschenabschnittes (7) angeordnete Umlenkführung (8) eine um eine horizontale Drehachse (15) drehbare Seilrolle (13) ist.

4. Hub- und Schwenkvorrichtung nach Anspruch 3, dadurch gekennzeichnet, dass die Seilrolle (13) in einem Rollenkasten (16) gelagert ist, der seinerseits um eine vertikale, d.h. parallel zum unteren Rutschenabschnitt (7) verlaufende Achse (17) schwenkbar an diesem oder dem Rutschenturm (3) befestigt ist.

5. Hub- und Schwenkvorrichtung nach Anspruch 1, dadurch gekennzeichnet, dass der Austragsabschnitt (10) an seiner Oberseite (9) zwei aufragende, an ihren oberen freien Enden (18, 18') durch einen Querträger (19) verbundene Stützen (20, 20') aufweist.

6. Hub- und Schwenkvorrichtung nach Anspruch 5, gekennzeichnet durch einen Zugseilabschnitt (21, 21') der einenends an den oberen freien Enden der Stützen (20, 20') und anderenends an der Oberseite (9) des Austragsabschnittes (10) zwischen dem Befestigungspunkt (22, 22') der Stütze am Austragsabschnitt und der Austragsöffnung (23) angelenkt ist.

7. Hub- und Schwenkvorrichtung nach Anspruch 1 und 5, dadurch gekennzeichnet, dass der Querträger (19) vertikal schwenkbar an den oberen freien Enden (18, 18') der Stützen (20, 20') angelenkt ist.

8. Hub- und Schwenkvorrichtung nach Anspruch 1, 5 und 7, dadurch gekennzeichnet, dass der Querträger (19) aus einem U-Profil besteht.

9. Hub- und Schwenkvorrichtung nach Anspruch 1, 5, 7 und 9, dadurch gekennzeichnet, dass der aus einem U-Profil bestehende Querträger (19) an der Stegaussenseite (24) Achsstummel (25, 25') aufweist, mit denen er drehbar in Ausnehmungen (26, 26') der Stützen (20, 20') gelagert ist.

10. Hub- und Schwenkvorrichtung nach Anspruch 1, 5, 7 und 9, *dadurch gekennzeichnet,* dass der Querträger (19) an seinen beiden Enden jeweils die Lager (27') für zwei die Umlenkführungen bildende, zwischen den Schenkeln (28) des U-Profils angeordnete Seilrollen (11, 11') aufweist.

11. Hub- und Schwenkvorrichtung nach Anspruch 1, *dadurch gekennzeichnet,* dass der Rutschenturm (3) bzw. der untere Rutschenabschnitt (7) an den vertikalen, dem Querträger (19) zugewandten Kanten im Bereich der Seilführung mit Rollen, Schleissblechen (29) oder dgl. versehen ist.

## Revendications

1. Dispositif d'élévation et de basculement pour la partie de décharge (10) d'un glissoir de déchargement tubulaire, dont la tour (3) porte une partie de glissoir inférieure (7) dirigée sensiblement verticalement, qui est reliée par l'intermédiaire d'une liaison tournante (5), de façon à pouvoir pivoter horizontalement et verticalement, à la partie de décharge (10), caractérisé en ce que le dispositif d'élévation et de basculement (1) comprend un câble (4) de longueur variable pouvant être fixé, par l'une de ses extrémités (2), à la tour (3), qui est guidé, au moyen d'un guidage renvoi (8) (poulie (13)) placé sur l'un des côtés (6) de la tour (3) ou de la partie de glissoir inférieure (7) au-dessus de la liaison tournante (5), de façon à rejoindre au moins un second guidage de renvoi (poulies (11, 11')) placé sur le côté supérieur (9) de la partie de décharge (10) en y étant fixé, et qui est fixé (point de fixation (12)), par son extrémité (2'), à peu près à l'opposé du premier guidage de renvoi (8), au côté opposé (6') de la tour ou de la partie de glissoir inférieure.

2. Dispositif d'élévation et de basculement selon la revendication 1, caractérisé en ce que le câble (4) est fixé, par l'une de ses extrémités (2), à un treuil à manivelle autobloquant (14) placé au-dessous de la liaison tournante (5) sur la tour (3).

3. Dispositif d'élévation et de basculement selon la revendication 1, caractérisé en ce que le guidage de renvoi (8) placé au-dessus de la liaison tournante (5) de l'un des côtés de la tour (3) ou de la partie de glissoir inférieure (7) est une poulie (13) pouvant tourner autour d'un axe de rotation (15) horizontal.

4. Dispositif d'élévation et de basculement selon la revendication 3, caractérisé en ce que la poulie (13) est placée dans un carter (16) qui est lui-même fixé, de façon à pouvoir pivoter autour d'un axe (17) vertical, c'est-à-dire parallèle à la partie de glissoir inférieure (7), à celle-ci ou à la tour (3).

5. Dispositif d'élévation et de basculement selon la revendication 1, caractérisé en ce que la partie de décharge (10) comporte, sur son côté supérieur (9), deux bras d'appui (20, 20') montants, reliés à leurs extrémités supérieures libres (18, 18') par une traverse (19).

6. Dispositif d'élévation et de basculement selon la revendication 5, caractérisé par un brin de câble de traction (21, 21') qui est articulée, à une extrémité, à l'extrémité supérieure libre des bras d'appui (20, 20') et, à l'autre extrémité, au côté supérieur (9) de la partie de décharge (10) entre le point de fixation (22, 22') du bras d'appui à la partie de décharge et l'ouverture de décharge (23).

7. Dispositif d'élévation et de basculement, selon les revendications 1 à 5, caractérisé en ce que la traverse (19) est articulée de façon à pouvoir pivoter verticalement aux extrémités supérieures libres (18, 18') des bras d'appui (20, 20').

8. Dispositif d'élévation et de basculement, selon les revendications 1, 5 et 7, caractérisé en ce que la traverse (19) est constituée par un profilé en U.

9. Dispositif d'élévation et de basculement, selon les revendications 1, 5, 7 et 8, caractérisé en ce que la traverse (19), constituée par un profilé en U, comporte, à l'extérieur (24) du dos, des tourillons (25, 25') au moyen desquels elle est placée de façon à pouvoir tourner dans des évidements (26, 26') des bras d'appui (20, 20').

10. Dispositif d'élévation et de basculement, selon les revendications 1, 5, 7 et 9, caractérisé en ce que la traverse (19) comporte à chacune de ses extrémités les paliers (27') pour deux poulies (11, 11') placées entre les branches (28) du profilé en U, constituant des guidages de renvoi.

11. Dispositif d'élévation et de basculement selon la revendication 1, caractérisé en ce que la tour (3) ou la partie de glissoir inférieure (7) comporte sur les bords verticaux situés du côté de la traverse (19), dans la zone du guidage de câble, des rouleaux, des tôles d'usure (29) ou des éléments analogues.

## Claims

1. Lifting and slewing device for the discharge portion (10) of a tubular chute whose tower (3) carries a substantially vertically disposed lower chute portion (7) connected to the discharge portion (10) in such a way as to be horizontally and vertically pivotable by means of a rotary joint (5), characterised in that the lifting and slewing device (1) comprises a variable-length rope (4) fixable with one of its ends (2) to the chute tower (3) and guided to extend over a deflection guide element (8) (rope pulley (13)) arranged above the rotary joint (5) at one side (6) of the chute tower (3), or of the lower chute portion (7), to at least one second deflection guide element (rope pulleys (11, 11')) secured to the discharge portion (10) at the upper side (9) of the latter, the other end (2') of the said rope being secured (fixed point (12)), substantially opposite from the first deflection guide element (8'), to the opposite side (6') of the chute tower or the lower chute portion.

2. Lifting and slewing device according to claim 1, characterised in that one end (2) of the rope (4) is secured to a self-locking hand winch (14) which is arranged on the chute tower (3) below the rotary joint (5).

3. Lifting and slewing device according to claim 1, characterised in that the deflection guide element (8) situated above the rotary joint (5) at one side of the chute tower (3) or the lower chute portion (7) is a rope pulley (13) rotatable about a horizontal axis of rotation (15).

4. Lifting and slewing device according to claim 3, characterised in that the rope pulley (13) is mounted in a pulley box (16) which itself is secured on the chute tower (3) or on the lower chute portion (7) such as to be pivotable about a vertical axis (17), i.e. an axis parallel to the said chute portion.

5. Lifting and slewing device according to claim 1, characterised in that the discharge portion (10) has at its topside (9) two upwardly projecting props (20, 20') which are connected at their free ends (18, 18') by a transverse support (19).

6. Lifting and slewing device according to claim 5, characterised by a draw rope portion (21, 21') which is pivotably attached at one end to the upper free ends of the props (20, 20') and at the other end to the topside (9) of the discharge portion (10) between the discharge aperture (23) and the points (22, 22') at which the props are attached to the discharge portion.

7. Lifting and slewing device according to claims 1 and 5, characterised in that the transverse support (19) is articulated in vertically pivotable manner to the upper free ends (18, 18') of the props (20, 20').

8. Lifting and slewing device according to claims 1, 5 and 7, characterised in that the transverse support (19) consists of a U-section member.

9. Lifting and slewing device according to claims 1, 5, 7 and 9, characterised in that the transverse support (19), which consists of a U-section member, has at the web exterior (24) pin journals (25, 25') with which it is mounted pivotably in recesses (26, 26') of the props (20, 20').

10. Lifting and slewing device according to claims 1, 5, 7 and 9, characterised in that the transverse support (19) has at its two ends respectively the bearings (27') for two rope pulleys (11, 11') which constitute the deflection guide elements and which are arranged between the flanges (28) of the U-section member.

11. Lifting and slewing device according to claim 1, characterised in that the chute tower (3) or the lower chute portion (7) is provided at the vertical edges facing towards the transverse support (19), in the regions through which the ropes are taken, with pulleys, wearing plates (29) or the like.

FIG. 1

0 173 182

FIG. 2

FIG. 3

9

FIG. 4

FIG. 5

FIG. 6